# FASCICULE DE BREVET EUROPEEN

(11) **EP 0 366 525 B1**
(45) Date de publication et mention de la délivrance du brevet: **11.08.1993**
(21) Numéro de dépôt: 89402875.2
(22) Date de dépôt: 17.10.1989
(51) Int. Cl.: C10G 35/12

(54) **Procédé de réformage catalytique dans plusieurs zones réactionnelles à lit mobile côte à côte**
Katalytisches Reformierverfahren in einer Mehrzahl von nebeneinandergestellten Reaktionszonen mit beweglichem Bett
Catalytic reforming process in several juxtaposed moving bed reaction zones

(30) Priorité: 27.10.1988 FR 8814246
(43) Date de publication de la demande: 02.05.1990
(73) Titulaire: INSTITUT FRANCAIS DU PETROLE, 92502 Rueil-Malmaison (FR)
(72) Inventeur: De Bonneville, Jean, F-92500 Rueil-Malmaison (FR)

(56) Documents cités:
- CH-A- 552 049
- FR-A- 2 223 079
- US-A- 3 839 196
- US-A- 4 172 027

## Description

La présente invention concerne un procédé de conversion continue d'hydrocarbures, en présence d'un catalyseur, à une température comprise entre 480 et 600 °C, dans lequel on fait circuler une charge initiale constituée d'hydrocarbures et de l'hydrogène à travers au moins deux zones de réaction de type à lit mobile; le catalyseur circule sous forme d'un lit mobile à travers la zone de réaction en s'écoulant en continu de haut en bas de ladite zone; le catalyseur est ensuite soutiré en continu du bas de la zone de réaction et est envoyé dans une zone de régénération; ensuite, le catalyseur régénéré est envoyé dans une zone de traitement à l'hydrogène, distincte de la zone de réaction, où il est traité à une température généralement inférieure à la température réactionnelle, puis le catalyseur, après avoir été traité à l'hydrogène, est envoyé en continu dans une zone de sulfuration, distincte de la zone de traitement à l'hydrogène et distincte de la zone de réaction, et le catalyseur, après avoir été traité par un composé sulfuré, s'écoule en continu vers la zone de réaction.

La présente invention concerne plus particulièrement un procédé d'hydroréformage d'hydrocarbures, la charge pouvant être par exemple un naphta distillant entre environ 60 °C et environ 220 °C, en particulier un naphta de distillation direct; l'invention concerne également la production d'hydrocarbures aromatiques, par exemple la production de benzène, de toluène et de xylènes (ortho, méta ou para), soit à partir d'essences insaturées ou non, (par exemple des essences de pyrolyse de cracking (craquage), en particulier de steam cracking (craquage à la vapeur), ou de reformage catalytique), soit encore à partir d'hydrocarbures naphténiques capables par déshydrogénation de se transformer en hydrocarbures aromatiques.

La charge circule successivement dans chaque réacteur ou zone de réaction suivant un écoulement axial ou radial (c'est-à-dire du centre vers la périphérie ou de la périphérie vers le centre). Les zones de réactions sont disposées en série, côte à côte, de sorte que la charge s'écoule successivement à travers chacune de ces zones de réaction, avec chauffage intermédiaire de la charge entre les zones de réactions; le catalyseur frais est introduit en haut de la première zone de réaction où est introduite la charge fraîche ; il s'écoule ensuite en continu de haut en bas de cette zone d'où il est soutiré en continu par le bas, et par tout moyen approprié (lift en particulier) il est transporté en haut de la zone de réaction suivante dans laquelle il s'écoule en continu également de haut en bas, et ainsi de suite jusqu'à la dernière zone de réaction en bas de laquelle le catalyseur est également soutiré en continu puis envoyé dans une zone de régénération.

La circulation du catalyseur du bas d'une zone de réaction au haut d'une autre zone de réaction, du bas de la dernière zone de réaction à la zone de régénération et du bas de la zone de régénération au haut de la première zone de réaction, est réalisée au moyen de tout dispositif élévateur connu que dans la suite de la description et des revendications on désignera par le mot "lift".

Le solide qui se déplace de zone de réaction en zone de réaction et vers la zone de régénération peut être par exemple un catalyseur en grains. Ce catalyseur peut se présenter par exemple sous la forme de billes sphériques de diamètre compris généralement entre 1 et 3 mm, de préférence entre 1,5 et 2 mm, sans que ces valeurs soient limitatives. La densité en vrac du catalyseur est généralement comprise entre 0,4 et 1, de préférence entre 0,5 et 0,9 et plus particulièrement entre 0,55 et 0,8 sans que ces valeurs soient limitatives.

Quant à la régénération proprement dite du catalyseur, elle peut être effectuée par tout moyen connu. De préférence, le catalyseur est :
a) soumis à une combustion à l'aide d'un gaz renfermant de l'oxygène moléculaire;
b) soumis à une oxychloration au moyen d'un gaz renfermant de l'oxygène moléculaire et simultanément au moyen d'un halogène ou d'un composé halogéné, par exemple un hydracide halogéné ou un halogénure d'alkyle ;
c) soumis à un traitement final à l'aide d'un gaz renfermant de l'oxygène moléculaire.

Ces trois traitements s'effectuent soit successivement dans une zone unique à lit fixe, soit dans une enceinte à lit mobile, le catalyseur défilant successivement dans 3 zones distinctes où sont effectuées chacune des 3 étapes de régénération.

La régénération est suivie d'une purge, à l'azote par exemple, pour éliminer du catalyseur toutes traces d'oxygène gazeux résiduel.

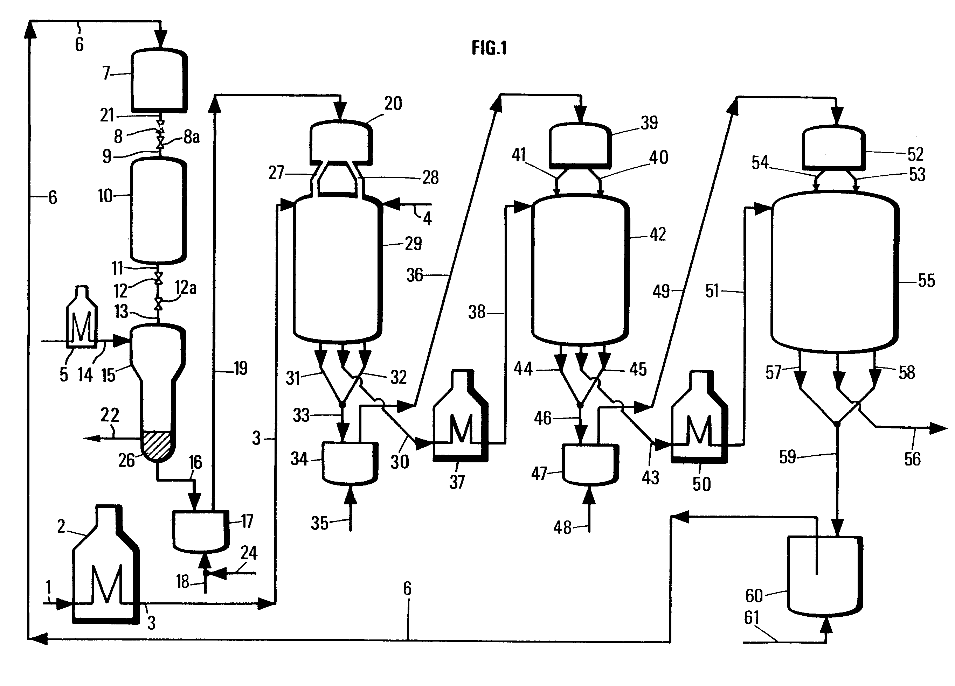

Le brevet US-A-4 172 027 de la demanderesse décrit plusieurs aspects d'un tel procédé. En particulier, la figure 1 de la présente demande de brevet correspond à l'art antérieur décrit dans US-A-4 172 027, et correspond à une technique toujours d'actualité aujourd'hui pour les nombreux avantages qu'elle procure.

Dans la figure 1 donnée pour illustrer l'art antérieur, on utilise comme gaz de lift de l'hydrogène de l'unité purifié. Cet hydrogène dit purifié, peut renfermer jusqu'à 10 %, en volume, ou mieux 4 %, d'hydrocarbures divers légers tels que l'éthane et le propane. A noter que le méthane n'est pas considéré comme une impureté et ce jusqu'à une quantité en volume égale à celle de l'hydrogène, ce qui signifierait que dans ce cas limite, le courant d'hydrogène dit purifié renfermerait 50 % de méthane en volume.

L'hydrogène de l'unité peut donc être utilisé, comme gaz de lift, tel quel, non seulement provisoirement lorsque les autres sources d'hydrogène font défaut, mais également, après purification simple, comme source d'hydrogène pendant toute la durée de la réaction de reforming (reformage) ou de production d'hydrocarbures aromatiques, pour le traitement à l'hydrogène du catalyseur régénéré et, lorsque la zone de régénération est située à côté du premier réacteur, comme fluide moteur du lift nécessaire à la remontée du catalyseur régénéré et traité à l'hydrogène au-dessus du premier réacteur.

Dans la figure 1, on utilise 3 réacteurs. La charge est introduite par la conduite 1, le four 2, la ligne 3 dans le premier réacteur 29. L'effluent du premier réacteur est soutiré par la conduite 30 et est envoyé à travers le four 37 et la conduite 38 dans le deuxième réacteur 42. L'effluent du deuxième réacteur est soutiré par la conduite 43 et est envoyé à travers le four 50 et la conduite 51 dans le troisième réacteur 55. L'effluent du troisième réacteur est soutiré par la conduite 56. Le catalyseur neuf, au démarrage de l'unité, est introduit par la conduite 4 sur la figure 1. Le catalyseur en provenance de la zone de régénération 10, pénètre dans le premier réacteur 29 par les conduites 27 et 28 dans lequel il chemine sous forme d'un lit mobile. Le catalyseur est soutiré du réacteur 29 par une pluralité de conduites telles que 31 et 32 et par la conduite 33 par laquelle il atteint le pot de lift 34. Ce soutirage est effectué en continu (un système de vannes n'étant pas indispensable), la régulation du débit d'écoulement de catalyseur étant assurée par un réglage classique approprié à l'aide d'hydrogène (hydrogène pur ou hydrogène de l'unité) injecté par une conduite non représentée au niveau de la zone 34.

Un débit de gaz de l'unité suffisant est envoyé pour empêcher l'entraînement d'une partie de l'effluent réactionnel avec les particules catalytiques. Le catalyseur est ensuite entraîné du pot de lift 34 vers le deuxième réacteur 42 par tout dispositif élévateur connu, que dans cette description, on désigne par le mot "lift". Le fluide du lift est avantageusement, comme expliqué ci-dessus, de l'hydrogène de recyclage ou de l'hydrogène produit par l'unité, introduit par la conduite 35. Le catalyseur entraîné ainsi dans le lift 36, atteint le récipient 39 d'où par une pluralité de conduites telles que 40 et 41, il atteint le deuxième réacteur 42. (Le récipient 39 et les conduites 40 et 41 peuvent éventuellement faire partie intégrante du réacteur 42, c'est-à-dire peuvent être aménagées à l'intérieur même du réacteur). Le catalyseur traverse le réacteur 42 sous la forme d'un lit mobile, est soutiré de ce réacteur, en continu, comme pour le premier réacteur 29, par la pluralité de conduites telles que 44 et 45 et atteint le pot de lift 47 par la conduite 46.

Par le lift 49, alimenté par exemple par de l'hydrogène de recyclage par la conduite 48, le catalyseur atteint le récipient 52 d'où par la pluralité de conduites telles que 53 et 54, il gagne le troisième réacteur à lit mobile 55. Le catalyseur est soutiré en continu du troisième réacteur 55 comme pour les premier et deuxième réacteurs 29 et 42, par la pluralité de conduites 57 et 58; ce catalyseur usé, atteint le pot de lift 60 par la conduite 59. Ce catalyseur usé est ensuite envoyé dans un ballon "accumulateur - décanteur" 7 au moyen du lift 6 alimenté par exemple par de l'hydrogène de recyclage introduit par la conduite 61 dans le pot de lift 60. Le catalyseur usé, atteint, à travers le système de vannes 8 (généralement il y a 2 vannes de l'ordre de 10 à 15 cm environ industriellement) et les conduites 21 et 9, la zone de régénération 10. La régénération et la purge du catalyseur ayant été effectuées dans la zone 10, le catalyseur atteint par les lignes 11 et 13 et le système de vannes 12 (généralement il y a deux vannes de l'ordre de 10 à 15 cm environ industriellement), la partie supérieure d'une enceinte 15 dans laquelle on introduit de l'hydrogène de l'unité, purifié, par la conduite 14 avec préchauffage dans le four 5. Le catalyseur chemine sous la forme d'un lit mobile vers la partie inférieure, ou zone 26, de l'enceinte 15; dans cette zone 26, on réalise le traitement à l'hydrogène du catalyseur régénéré, au moyen de l'hydrogène introduit par la conduite 14. Le catalyseur chemine dans 26 sous la forme d'un lit mobile.

Dans la figure 1, le catalyseur régénéré et traité à l'hydrogène, est soutiré en continu de l'enceinte 15 par la conduite 16 et atteint le lift pot (ou pot de lift) 17 d'où il est entraîné en continu par de l'hydrogène de l'unité, purifié, introduit par la conduite 18, dans le lift 19, vers un ballon récepteur 20 situé, sur la figure 7, au-dessus du premier réacteur 29. De ce ballon récepteur 20, le catalyseur s'écoule ensuite en continu sous la forme d'un lit mobile, à travers une pluralité de conduites ou "jambes" telles que 27 et 28 vers le premier réacteur 29. La sulfuration qui est faite après l'hydrogénation du catalyseur régénéré est effectuée en partie dans le pot de lift 17 et en partie dans le lift 19, éventuellement aussi en partie dans le ballon 20 et les jambes 27 et 28. Le composé soufré, et éventuellement de l'hydrogène (de préférence de l'hydrogène de l'unité, purifié) qui sert de gaz porteur au composé soufré, est introduit dans le pot de lift 17 par la conduite 24.

Le cheminement du catalyseur dans les zones 15, 17 et 20, dans le lift 19 et dans les conduites de transfert de ce catalyseur, est effectué en continu pour assurer une bonne régulation des températures du traitement à l'hydrogène et de la sulfuration et pour éviter de soumettre le catalyseur à de brusques variations de température.

L'excès d'hydrogène au cours du traitement à l'hydrogène, peut être éliminé par la conduite de désengagement 22.

Un tel schéma présente cependant quelques inconvénients dus à l'emploi d'hydrogène comme gaz de lift (gaz servant à élever les particules catalytiques d'une position basse à une position élevée, par exemple du bas d'un réacteur au haut du réacteur suivant, du bas du dernier réacteur au haut de la zone de régénération et du bas de la zone de régénération en haut du premier réacteur). L'inconvénient d'emploi d'hydrogène se manifeste essentiellement d'une part en amont et d'autre part en aval de la zone de régénération (10). Cette zone de régénération doit être en effet exempte de toute trace d'hydrogène. Il convient donc en amont de la zone de régénération (10) d'éliminer et de bien purger l'hydrogène du lift (6) ayant servi à transporter vers le régénérateur le catalyseur provenant du dernier réacteur (55). Et de même, il convient, en aval de la zone de régénération, de rétablir un courant d'hydrogène pour entraîner, par lift, le catalyseur régénéré dans le premier réacteur. Ces dispositifs de protection du régénérateur de toute présence d'hydrogène nécessite actuellement des vannes, par exemple, sur le schéma, 8, 8a, 12 et 12a, qui sont assez larges actuellement (de l'ordre de 4 pouces (10, 16 cm) évoluant plutôt aujourd'hui vers 6 pouces, soit 15, 27 cm) en raison des pressions d'hydrogène qui règnent à proximité du régénérateur 15. Sur la figure 1, pour simplifier, on a représenté 2 vannes 8 et 8a, et 2 vannes 12 et 12a, mais en réalité, il y a 5 ou 6 vannes de 4 ou 6 pouces en amont du régénérateur (10) et autant en aval du régénérateur (10). Or, de telles vannes ont toujours posé des problèmes spécifiques de fabrication et de sécurité. L'objet de la présente invention permet d'éviter l'emploi d'hydrogène à proximité du régénérateur. Dans le procédé et le dispositif selon l'invention, d'une part l'hydrogène est remplacé par de l'azote (ou par tout autre gaz inerte) dans le lift transportant le catalyseur usé depuis le dernier réacteur traversé par la charge jusqu'au régénérateur, et d'autre part l'hydrogène est également remplacé par de l'azote (ou par tout autre gaz inerte) dans le lift transportant le catalyseur régénéré depuis le régénérateur jusqu'au premier réacteur traversé par la charge. Par contre, selon l'invention, il importe d'utiliser de l'hydrogène dans les autres lifts de l'unité de réformage catalytique comme enseigné dans les brevets US-A-4 133 733, 4 210 519 et 4 233 268 de la demanderesse dans lesquels on a expliqué les avantages de l'hydrogène sur les gaz inertes comme gaz de transport dans les lifts. Le procédé et le dispositif selon l'invention vont permettre notamment de réduire le nombre de vannes de 4 ou 6 pouces en amont du régénérateur (10) et en aval du régénérateur (10). Cette technique évite la fabrication coûteuse et la manipulation d'un trop grand nombre de vannes de large diamètre.

A noter qu'à la fin de la régénération, on purge le régénérateur à l'azote (ou autre gaz inerte) pour éliminer toute trace d'oxygène. On se trouve donc dès cet instant en atmosphère de gaz inerte pour procéder au lift du catalyseur régénéré vers le premier réacteur alors que dans l'art antérieur, il fallait, après la purge du régénérateur, réintroduire de l'hydrogène, c'est-à-dire effectuer une manipulation supplémentaire qui est évitée ici.

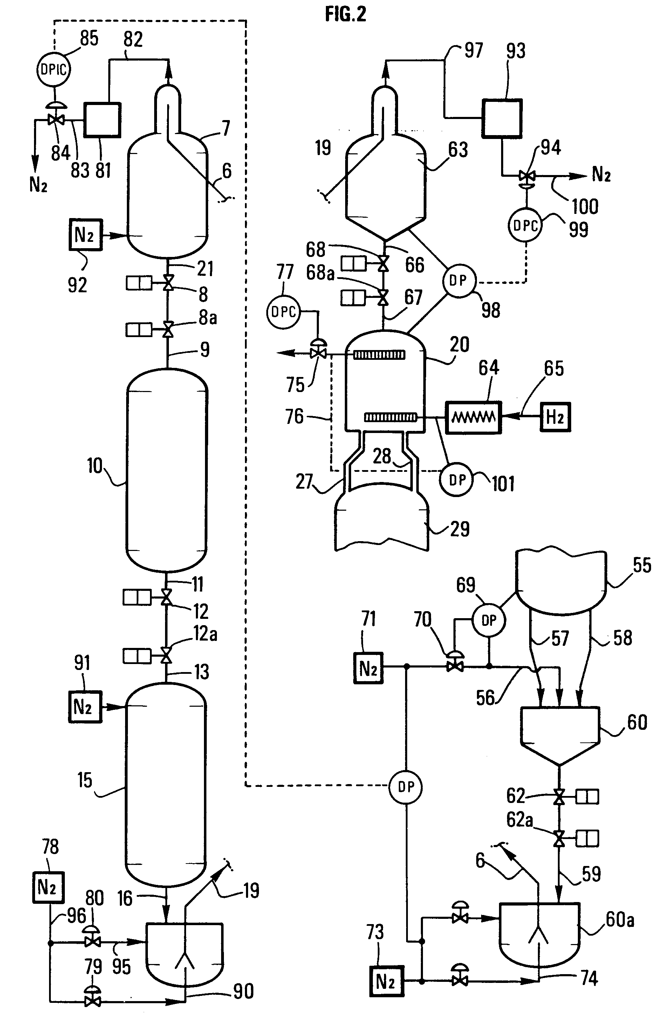

Conformément à l'invention, les deux ballons tampons (7) et (15) de part et d'autre du régénérateur (10) sont sous azote dans la figure 2 (au lieu d'être sous hydrogène dans la figure 1).

L'étanchéité (donc la sécurité) N₂ - H₂ se fait sur des lignes de faible section, par exemple de l'ordre de 2 pouces (soit 5,08 cm) (au lieu d'environ 4 ou 6 pouces (10,16 ou 15,27 cm), voire plus) et est donc beaucoup plus facile à réaliser.

La séparation N₂ - H₂ en marche normale se fait par des barrages de pression (Delta P dans le sens correct, c'est-à-dire dans le sens qui conduit à une pression du côté des lignes où circule l'azote supérieure (surpression) à la pression dans les lignes où circule l'hydrogène.

Tout cela amène une simplification considérable du côté de ces lignes de transfert entre les ballons tampons (7) et (15) d'une part, et le régénérateur (10) d'autre part.

Le dispositif nécessite de ce fait moins de vannes de 4 ou 6 pouces comme expliqué plus haut, tout en pouvant maintenir, comme à l'habitude, les mêmes règles de sécurité imposées.

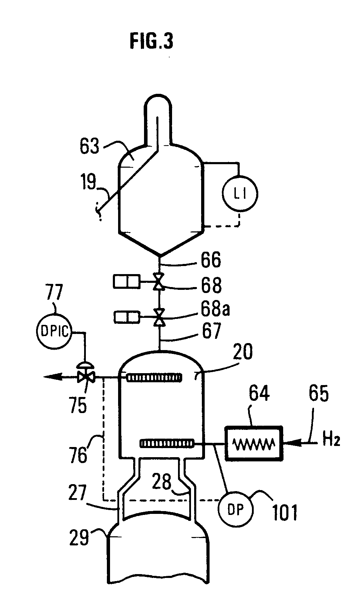

Les indications suivantes permettront de mieux comprendre l'invention, celle-ci étant illustrée par les figures 2 et 3, sur lesquelles, par simplification, on n'a représenté ni le trajet de la charge, ni les réacteurs autres que le premier et dernier réacteurs, ni la conduite d'admission de catalyseur frais dans le premier réacteur.

Dans la figure 2, on retrouve les caractéristiques essentielles de la figure 1 avec en outre les dispositifs de transition entre les circuits sous hydrogène et ceux sous azote : ces dispositifs d'abord sont représentés en fond du dernier réacteur 55 par les systèmes 69, 70, 71, permettant le passage du catalyseur sous hydrogène dans le bidon 60 en milieu sous azote, avec disposition de deux vannes 62 et 62a de deux pouces (5,08 cm) par exemple (vannes fabriquées aisément).

Les dispositifs 73 et 74 illustrent la mise en marche du lift 6 alimenté en azote, à partir du réservoir ou bidon 60a. A l'issue de la régénération, le catalyseur est transporté par le lift 19 (alimenté en azote par les dispositifs 78, 80, 79) vers le ballon 63 et l'on a représenté les lignes 66, 67, et les agencements 65 et 64 qui permettent de remettre le catalyseur sous hydrogène (ligne 65 d'arrivée d'hydrogène, préchauffé par le four 64) après élimination de l'azote par les lignes 75 et les moyens de contrôle 77 et 76. Le catalyseur ici circule à travers deux vannes 66 et 67 de deux pouces seulement environ.

Sur la figure 2, on a également représenté l'élimination des fines particules de catalyseur en haut du lift 6, par la conduite 82, le séparateur 81 et les lignes 83, et la vanne 84 (avec dispositif de contrôle de pression 85). La zone d'élutriation (63) (pour éliminer des fines particules de catalyseur dans la zone 81a) et la zone de réduction (20) ainsi que leurs éléments connexes sont représentés séparément sur la figure 3.

Les unités de réformage catalytique ont tendance à être de plus en plus volumineuses pour traiter un maximum de charge. Par ailleurs, on cherche à opérer de nos jours avec des pressions de plus en plus basses elles étaient il y a quelques années de l'ordre de 8 à 10 bars (8 x 10⁵ Pascal à 10 x 10⁵ Pascal) et sont maintenant de l'ordre de 6 à 3 bars (6 x 10⁵ Pascal à 3 x 10⁵ bars). De telles unités nécessitent en outre du fait de l'emploi d'hydrogène dans le lift conduisant le catalyseur usé depuis le dernier réacteur jusqu'en haut du régénérateur une hauteur importante de ce qu'on appelle communément la "Tour" incluant, sur la figure 1, le bas du lift 17, les ballons tampons 7 et 15, le régénérateur 10 et les vannes importantes 8, 8a, 12 et 12a. Or il devient difficile de construire précisément des unités de grosses capacités fonctionnant sous basse pression, en raison des difficultés de mise en oeuvre des transferts à travers des lignes de vannes en 4 pouces (10,5 cm) ou davantage entre les ballons tampons (7) et (15) et le régénérateur (10).

Ces vannes sont difficiles à fabriquer et très coûteuses, aussi le passage en 6 pouces (15,24 cm) de ces vannes se conçoit difficilement sans un programme de fabrication et d'essais au préalable, programme également très coûteux.

Le problème de ces vannes est actuellement :
- isolation parfaite entre le régénérateur (sous azote et oxygène) et les ballons tampons (sous hydrogène)
- utilisation fréquente de ces vannes dans une atmosphère chargée de fines de catalyseurs.

Ainsi, l'idée de l'invention est la suivante: s'arranger pour que ces deux ballons tampons soient sous azote et reporter le problème passage H₂ - azote dans les lignes de petites tailles et notamment d'une part les lignes en sortie du dernier réacteur et d'autre part les lignes en tête du ler réacteur.

L'invention est concevable en respectant les règles suivantes: (les sigles dp et dpc sur les figures concernent les contrôles de pression : "DP" est le différentiel de pression ou "Δ-pressure": le terme "DPC" indique qu'une valve de régulation est associée à "DP" pour assurer la chaîne de régulation).
- les premier et dernier lifts fonctionnent avec de l'azote ou tout autre gaz inerte
- du côté du ballon tampon supérieur (7) (voir figure 2) :
   . le débit nécessaire à l'obtention de l'étanchéité sous le dernier réacteur 55 est fait avec de l'azote ou tout autre gaz inerte, mais de manière à avoir une surpression (très faible), pour limiter au maximum l'envoi d'azote vers la section réactionnelle. On devrait pouvoir limiter cet envoi à quelques kg par heure ;
   . les vannes utilisées (telles que 62 et 62a) sous le dernier réacteur de l'ordre de 2 pouces (5,08 cm) seront motorisées et serviront de vanne de sécurité pour isoler la section régénération en cas de problème;
   . le ballon tampon supérieur (7) est seulement sous azote (admission par (92)) et les conditions opératoires (ou "design") sont beaucoup moins sévères, en particulier la température. Le lift 6 est sous azote ou autre gaz inerte.

Du côté du ballon tampon inférieur (15) (voir les figures 2 et 3) :
- ce ballon est uniquement sous azote (admission par 91) ou gaz inerte à basse température ;
- lift 19 sous azote ou autre gaz inerte : le dispositif d'admission d'azote 78 dans les lignes 90, 95 et 96 est contrôlé par les dispositifs 80 et 79 ;
- trémie supérieure (63)-(20) en deux parties :
   . partie supérieure (63) avec élutriation (c'est-à-dire décantation ou séparation) sous azote ou tout autre gaz inerte
   . partie inférieure (20) stockage et réduction sous H₂ chaud, introduit par la ligne (65) préchauffé par un four électrique 64, avec contrôle DP (101) et DPC (77) via (76) par la vanne (75)
- les deux parties de la trémie supérieure 63-20 sont séparées par une jambe 66-67 pleine de catalyseur équipée par exemple de deux vannes (68 et 68a) par exemple de l'ordre de 2 pouces (5,08 cm), motorisées qui assureront la sécurité.

Les vannes de sécurité pourront être activées en cas de différence de pression incorrecte, d'élévation de température intempestive, de mauvaise pureté de l'azote, etc...

Cette disposition selon l'invention entraîne la création d'un nouveau réseau d'azote pour la circulation de catalyseur et aussi pour assurer l'élutriation (séparation), à travers les conduites (97) et (100), le séparateur (93) et la vanne (94), en liaison avec les contrôles DP (98) et DPC (99).

Compte tenu des quantités d'azote nécessaires, il semble judicieux de prévoir une recirculation autonome avec un petit compresseur (DP environ 3 à 4 bars).

Un des avantages selon le procédé et le dispositif de l'invention est qu'il n'y a plus nécessité de prévoir un système très sophistiqué pour assurer l'étanchéité entre les ballons tampons et le régénérateur, sans diminuer la sécurité de l'opération.

Un tel système réduit de manière importante le nombre de grosses vannes et surtout les conditions opératoires des éventuelles autres grosses vannes restantes dans l'unité.

Un autre avantage à prendre aussi en compte est la diminution sensible de la hauteur totale de la tour (diminution d'au minimum 5 à 6 mètres).

En bref, l'invention concerne un procédé de réformage d'hydrocarbures ou de production d'hydrocarbures aromatiques, en présence d'un catalyseur, à une température par exemple comprise entre 480 et 600 °C, dans lequel on fait circuler une charge initiale, constituée d'hydrocarbures, et de l'hydrogène à travers au moins 2 zones de réaction, disposées en série, côte à côte, chacune de ces zones de réaction étant de type à lit mobile, la charge circulant successivement dans chaque zone de réaction, et le catalyseur circulant également successivement à travers chaque zone de réaction en s'écoulant en continu, sous la forme d'un lit mobile, de haut en bas dans chacune d'elle, le catalyseur soutiré du bas de chaque zone de réaction (sauf la dernière) étant transporté dans un courant d'hydrogène au sommet de la zone de réaction suivante, le catalyseur, soutiré en continu du bas de la dernière zone de réaction traversée par la charge, étant ensuite envoyé dans une zone de régénération, le procédé étant caractérisé :
(a) en ce que le catalyseur usé soutiré de la dernière zone de réaction traversée par la charge est purgé de tout l'hydrogène environnant,
(b) en ce que ensuite on met le catalyseur usé sous azote,
(c) en ce que, à l'aide d'un courant d'azote, on envoie le catalyseur usé dans une zone de régénération,
(d) en ce que le catalyseur régénéré est envoyé au moyen d'un courant d'azote dans une zone d'élutriation des fines particules de catalyseur régénéré et en ce que on purge ensuite tout l'azote environnant,
(e) en ce que on introduit le catalyseur régénéré dans une enceinte en présence d'hydrogène, en vue de procéder à une réduction partielle ou totale du catalyseur avant de l'envoyer en continu dans la première zone de réaction.

C'est en opérant ainsi, mettant en oeuvre les jeux de vannes adéquats 62 et 62a sous le dernier réacteur et 68 et 68a au-dessus de la zone de réduction du catalyseur régénéré (avant son introduction dans le premier réacteur qu'on peut supprimer la plupart des grosses vannes directement en amont et en aval du régénérateur comme expliqué plus haut).

## Revendications

1. Procédé de réformage d'hydrocarbures ou de production d'hydrocarbures aromatiques, en présence d'un catalyseur, dans lequel on fait circuler une charge initiale, constituée d'hydrocarbures, et de l'hydrogène à travers au moins 2 zones de réaction, disposées en série, côte à côte, chacune de ces zones de réaction étant de type à lit mobile, la charge circulant successivement dans chaque zone de réaction, et le catalyseur circulant également successivement à travers chaque zone de réaction en s'écoulant en continu, sous la forme d'un lit mobile, de haut en bas dans chacune d'elle, le catalyseur soutiré du bas de chaque zone de réaction (sauf la dernière) étant transporté dans un courant d'hydrogène au sommet de la zone de réaction suivante, le catalyseur, soutiré en continu du bas de la dernière zone de réaction traversée par la charge, étant ensuite envoyé dans une zone de régénération, le procédé étant caractérisé :
(a) en ce que le catalyseur usé soutiré de la dernière zone de réaction traversée par la charge est purgé de tout l'hydrogène environnant,
(b) en ce que ensuite on met le catalyseur usé sous azote,
(c) en ce que, à l'aide d'un courant d'azote, on envoie le catalyseur usé dans une zone de régénération,
(d) en ce que le catalyseur régénéré est envoyé au moyen d'un courant d'azote dans une zone d'élutriation des fines particules de catalyseur régénéré et en ce que on purge ensuite tout l'azote environnant,
(e) en ce que on introduit le catalyseur régénéré dans une enceinte en présence d'hydrogène, en vue de procéder à une réduction partielle ou totale du catalyseur avant de l'envoyer en continu dans la première zone de réaction.

## Claims

1. A method of reforming hydrocarbons or producing aromatic hydrocarbons in the presence of a catalyst, wherein an initial feedstock comprising hydrocarbons, and hydrogen are circulated through at least 2 reaction zones arranged in series side by side, each of the reaction zones being of the fluidised bed type, the feedstock circulating successively into each reaction zone and the catalyst also circulating successively through each reaction zone, flowing continuously down each zone in the form of a fluidised bed, the catalyst drawn off from the bottom of each reaction zone (except the last) being conveyed in a hydrogen stream to the top of the next reaction zone, the catalyst drawn off continuously from the bottom of the last reaction zone through which the feedstock passes then being sent into a regenerating zone, characterised in that:
(a) in that the exhausted catalyst drawn off from the last reaction zone through which the feedstock passes is purged of all the surrounding hydrogen,
(b) in that the exhausted catalyst is then put under nitrogen,
(c) in that the exhausted catalyst is passed into a regenerating zone by means of a nitrogen stream,
(d) in that the regenerated catalyst is passed by means of a nitrogen stream into a zone for elutriating the fine particles of regenerated catalyst, and that all the surrounding nitrogen is then purged, and
(e) in that the regenerated catalyst is passed into a chamber in the presence of hydrogen, with a view to partially or totally reducing the catalyst before it is sent continuously into the first reaction zone.

## Patentansprüche

1. Verfahren zur Reformierung von Kohlenwasserstoffen oder zur Herstellung von aromatischen Kohlenwasserstoffen in Gegenwart eines Katalysators, bei dem man einen Einsatzstoff, der aus Kohlenwasserstoffen und aus Wasserstoff besteht, durch mindestens zwei Reaktionszonen zirkulieren läßt, die in Reihe angeordnet sind, Seite an Seite, und jede dieser Reaktionszonen ist in der Art eines Fließbettes, wobei der Einsatzstoff nacheinander durch jede der Reaktionszonen zirkuliert und der Katalysator ebenfalls nacheinander durch jede Reaktionszone fließt, indem er kontinuierlich in Form eines Fließbettes von oben nach unten in einer jeden strömt, der vom unteren Ende einer jeden Reaktionszone (außer der letzten) abgezogene Katalysator wird in einem Wasserstoffstrom zum oberen Ende der nächsten Reaktionszone transportiert, der vom unteren Endeder letzten Reaktionszone, die von dem Einsatzstoff durchquert worden ist, kontinuierlich abgezogene Katalysator wird anschließend in eine Regenerierungszone geschickt, wobei das Verfahren gekennzeichnet ist:
(a) dadurch, daß der gebrauchte Katalysator, der aus der letzten Reaktionszone, die vom Einsatzstoff durchquert worden ist, von jeglichem umgebenden Wasserstoff befreit wird,
(b) dadurch, daß der gebrauchte Katalysator anschließend unter Stickstoff gesetzt wird,
(c) dadurch, daß der gebrauchte Katalysator mit Hilfe eines Stickstoffstromes in eine Regenerierungszone geschickt wird,
(d) dadurch, daß der regenerierte Katalysator mittels eines Stickstoffstromes in eine Zone zum Entstauben des regenerierten Katalysators von feinen Partikeln geschickt wird und dadurch, daß man anschließend den ganzen umgebenden Stickstoff entfernt,
(e) dadurch, daß der regenerierte Katalysator in einen Behälter in Gegenwart von Wasserstoff eingeführt wird, mit dem Ziel, eine teilweise oder völlige Reduktion des Katalysators durchzuführen, bevor er kontinuierlich in die erste Raktionszone geschickt wird.
